# EUROPÄISCHE PATENTSCHRIFT

(11) **EP 1 516 121 B1**
(45) Veröffentlichungstag und Bekanntmachung des Hinweises auf die Patenterteilung: **12.09.2018**
(21) Anmeldenummer: 03759829.9
(22) Anmeldetag: 05.06.2003
(51) Int. Cl.: F03D 7/04, F03D 7/02

(54) **WINDKRAFTANLAGE**
WIND POWER PLANT
INSTALLATION D'ENERGIE EOLIENNE

(30) Priorität: 14.06.2002 DE 10226713
(43) Veröffentlichungstag der Anmeldung: 23.03.2005
(73) Patentinhaber: Van Egeren, Martin, 50321 Brühl (DE); Krieger, Klaus, 50321 Brühl (DE)
(72) Erfinder: Van Egeren, Martin, 50321 Brühl (DE); Krieger, Klaus, 50321 Brühl (DE)
(74) Vertreter: Hübsch, Dirk
(86) Internationale Anmeldenummer: PCT/DE2003/001868
(87) Internationale Veröffentlichungsnummer: WO 2003/106839

(56) Entgegenhaltungen:
- FR-A- 1 433 734
- GB-A- 2 010 980
- GB-A- 2 233 400
- US-A- 4 435 646
- US-A- 4 495 423
- US-A- 6 158 953

## Beschreibung

Die Erfindung betrifft eine Windkraftanlage mit mindestens einem Rotor, wobei der Rotor mindestens ein Rotorblatt, vzw. mehrere Rotorblätter aufweist, wobei das Rotorblatt mit einer Rotorwelle wirksam verbunden ist, wobei das Rotorblatt um eine im wesentlichen radial ausgerichtete Verstellachse drehbar ist und wobei zur Einstellung des Rotorblattes mindestens eine Verstell-Einrichtung vorgesehen ist.

Im Stand der Technik, von dem die Erfindung ausgeht, ist eine Windkraftanlage bekannt (DE 42 41 631 C2), bei welcher der Rotor drei Rotorblätter aufweist und wobei die Rotorblätter über drehbar gelagerte Wellenstümpfe über eine Rotorblattlagerung wirksam mit der Rotorwelle verbunden sind. Dadurch, dass die Rotorblätter drehbar gelagert sind, sind sie - bzgl. der Achse der Rotorwelle betrachtet - um eine im wesentlichen radial ausgerichtete Verstellachse drehbar. Zur Einstellung, also zur Positionierung des jeweiligen Rotorblattes ist jeweils eine auf die Verstellachse einwirkende Verstell-Einrichtung vorgesehen. Die hier beschriebene Verstell-Einrichtung ist als Kurvenscheibengetriebe ausgebildet. Hierzu weist das Kurvenscheibengetriebe eine Scheibe sowie eine mit der Scheibe zusammenwirkende Feder und einen mit der Scheibe zusammenwirkenden Riemen auf. Über das so ausgebildete jeweilige Kurvenscheibengetriebe wird die Bewegung des Rotorblattes um dessen Verstellachse gesteuert. Durch die jeweilige Verstell-Einrichtung wird ein Regler- / Steuerelement für das jeweils wirksame, vom Blattwinkel des Rotorblattes abhängende Haltemoment gebildet.

Weiterhin ist im Stand der Technik eine Windkraftanlage bekannt (DE-PS 36 28 626), bei der die Rotorblätter über eine als Stangengetriebe ausgeführte Verstell-Einrichtung entsprechend verstellt, nämlich verdreht werden können. Hierzu weist der Rotor einen Reiter auf, der auf einer Art Achse axial verschiebbar gelagert ist. Von dem Reiter erstrecken sich jeweils Stangen zu Punkten an den Rotorblättern, wobei bei einer Bewegung des Reiters entlang seiner Achse wiederum die entsprechenden Rotorblätter verdreht, nämlich verstellt werden. Über entsprechende Federelemente wird die Bewegung des Reiters wiederum gesteuert. Im Endeffekt ist auch hier eine Verstell-Einrichtung zur Regelung / Steuerung der Positionen der Rotorblätter geschaffen.

Schließlich ist aus FR 1.433.734 A eine Windkraftanlage bekannt, wo mehrere Rotorblätter um radial ausgerichtete Verstellachsen drehbar gelagert sind. Zur Einstellung der Rotorblätter ist eine Verstelleinrichtung vorgesehen, die mehrere Komponenten, wie beispielsweise Rollen und längliche, plattenförmige Zwischenstücke aufweist.

Die im Stand der Technik bekannten Windkraftanlagen, insbesondere deren Verstell-Einrichtungen zur Verstellung bzw. Positionierung der Rotorblätter sind noch nicht optimal ausgebildet. So ist bei der eingangs genannten Windkraftanlage (DE 42 41 631 C2) die Kraftübertragungskette der hier verwendeten Verstell-Einrichtung, nämlich des Kurvenscheibengetriebes noch nicht optimal. Einerseits können die hier verwendeten Elemente, nämlich besonders der Riemen wie auch das Federelement bei permanenter Benutzung verschleißen, insbesondere der Riemen "ausleiern". Dies um so mehr, je mehr die hier verwendete Verstell-Einrichtung den Witterungseinflüssen ausgesetzt ist, da das hier dargestellte Kurvenscheibengetriebe eben nicht vor Witterungseinflüssen geschützt ist. Folglich kommt es in der hier resultierenden Kraftübertragungskette zu einem relativ großen Spiel, was zur Folge hat, dass die Rotorblätter eben nicht optimal positioniert und eingestellt werden können. Auch weist hier jedes Rotorblatt eine separate Verstell-Einrichtung auf, woraus resultiert, dass der Wartungsaufwand ebenso wie der Montage- und Justierungsaufwand entsprechend hoch und die Anfälligkeit der gesamten Anlage erhöht ist, was insgesamt zu einem erhöhten Reparatur- und Wartungsaufwand führt. Schließlich ist die gesamte Verstellung aller Rotorblätter aufgrund der Vielzahl der Verstell-Einrichtungen nicht optimal. So ist bei der anderen im Stand der Technik bekannten und oben beschriebenen Windkraftanlage (DE-PS 36 28 626) auch nicht optimal, dass hier eine als Stangengetriebe ausgeführte Verstell-Einrichtung zur Realisierung der Verstellung der Rotorblätter vorgesehen ist. Einerseits sind auch die hier vorhandenen Elemente, nämlich die Federelemente sowie der Reiter wieder äußeren Witterungseinflüssen ausgesetzt, andererseits ist auch hier die realisierte Kraftübertragungskette, insbesondere durch die große Anzahl von Gelenken mit entsprechendem Spiel behaftet (Toleranzkette), was wiederum zu den bereits oben beschriebenen Nachteilen führt. Zusätzlich wirken sich die mitrotierenden Stangen des Stangengetriebes aerodynamisch ungünstig und auch daher leistungsmindernd für die gesamte Windkraftanlage aus. Im Ergebnis sind daher die im Stand der Technik bekannten Windkraftanlagen noch nicht optimal ausgebildet.

Der Erfindung liegt daher die Aufgabe zugrunde, die eingangs genannte Windkraftanlage derart auszugestalten und weiterzubilden, dass zur Einstellung der Positionen der Rotorblätter das Spiel und die Toleranzkette der Kraftübertragungskette verringert ist, insbesondere auch der Montage- und Wartungsaufwand für eine derartige Verstell-Einrichtung und die damit verbundenen Kosten erheblich minimiert sind, wobei insbesondere die Einstellung / Positionierung aller Rotorblätter optimiert ist und vzw. die Verstell-Einrichtung vor Witterungseinflüssen gut schützbar ist.

Die zuvor aufgezeigte Aufgabe ist nun dadurch gelöst, dass die Verstell-Einrichtung mindestens eine mit einer Steuerscheibe zusammenwirkende Kurvenscheibe aufweist und die Kurvenscheibe derart angeordnet ist, dass die Drehachse der Kurvenscheibe mit der Verstellachse zusammenfällt. Dadurch, dass die Verstell-Einrichtung nunmehr so ausgebildet ist, dass sie einerseits eine Steuerscheibe, andererseits eine Kurvenscheibe aufweist, ist die Verstell-Einrichtung weniger verschleißanfällig. Insbesondere entfällt der im Stand der Technik bekannte und verwendete Riemen. Weiterhin ist die Verstell-Einrichtung so ausgebildet, dass diese für mehrere Rotorblätter gemeinsam verwendet werden kann, also durch eine einzige Verstell-Einrichtung, nämlich im wesentlichen mit einer Steuerscheibe, die auf vzw. mehrere Kurvenscheiben wirkt, alle Rotorblätter gemeinsam entsprechend verstellt werden können. Hierzu wirken die Steuerscheibe und die Kurvenscheibe entsprechend reibschlüssig zusammen, was im folgenden noch näher erläutert werden wird. Von Vorteil ist, dass die so ausgebildete Verstell-Einrichtung bevorzugt in einer Rotornabe vollständig integrierbar ist, und vzw. dort vollständig "einkapselbar" ist, so dass sie vor äußeren Witterungseinflüssen geschützt ist, was weitere Vorteile mit sich bringt. Hierdurch sind Elemente der Verstell-Einrichtung entsprechend vor den Witterungseinflüssen, insbesondere vor Korrosion, Vereisung etc. geschützt. Zusätzlich entfallen ebenfalls die im Stand der Technik verwendeten Stangenelemente des hier verwendeten Stangengetriebes. Da die Verstell-Einrichtung in eine Rotornabe integrierbar ist, weist diese daher aerodynamische Vorteile auf, was wiederum zu einer Leistungserhöhung der gesamten Windkraftanlage führt. Im Ergebnis sind die eingangs beschriebenen Nachteile vermieden und entscheidende Vorteile erzielt.

Es gibt nun eine Vielzahl von Möglichkeiten die erfindungsgemäße Windkraftanlage in vorteilhafter Art und Weise auszugestalten und weiterzubilden. Hierfür darf zunächst auf die dem Patentanspruch 1 nachgeordneten Patentansprüche verwiesen werden. Im folgenden soll nun ein bevorzugtes Ausführungsbeispiel der Erfindung anhand der nachfolgenden Zeichnung und zugehörenden Beschreibung näher erläutert werden.

In der Zeichnung zeigt:
- Fig. 1: den Rotor der erfindungsgemäßen Windkraftanlage von vorne in schematischer Darstellung,
- Fig. 2: den Rotor der erfindungsgemäßen Windkraftanlage in schematischer Darstellung von der Seite,
- Fig. 3: in schematischer Darstellung von vorne das Innere der Rotornabe, nämlich die wesentlichen Bestandteile der Verstell-Einrichtung mit Blick in die "geöffnete Rotornabe",
- Fig. 4: die Rotornabe im Schnitt von der Seite in schematischer Darstellung mit der in der Rotornabe integrierten Verstell-Einrichtung,
- Fig. 5: in schematischer Darstellung teilweise im Schnitt eine Draufsicht auf die Rotornabe mit integrierter Verstell-Einrichtung,
- Fig. 6: in schematischer vergrößerter Darstellung von vorne eine einzelne Kurvenscheibe,
- Fig. 7: in schematischer Darstellung eine Leistungskennlinie der erfindungsgemäßen Windkraftanlage in Abhängigkeit der Windgeschwindigkeit,
- Fig.8: in schematischer Darstellung eine Leerlauf-Drehzahlkennlinie der erfindungsgemäßen Windkraftanlage in Abhängigkeit der Windgeschwindigkeit und
- Fig.9: die Kennlinie des Haltemomentes für die Positionierung der Rotorblätter in schematischer Darstellung in Abhängigkeit des Verstellwinkels, also die "Reglercharakteristik" der Verstell-Einrichtung.

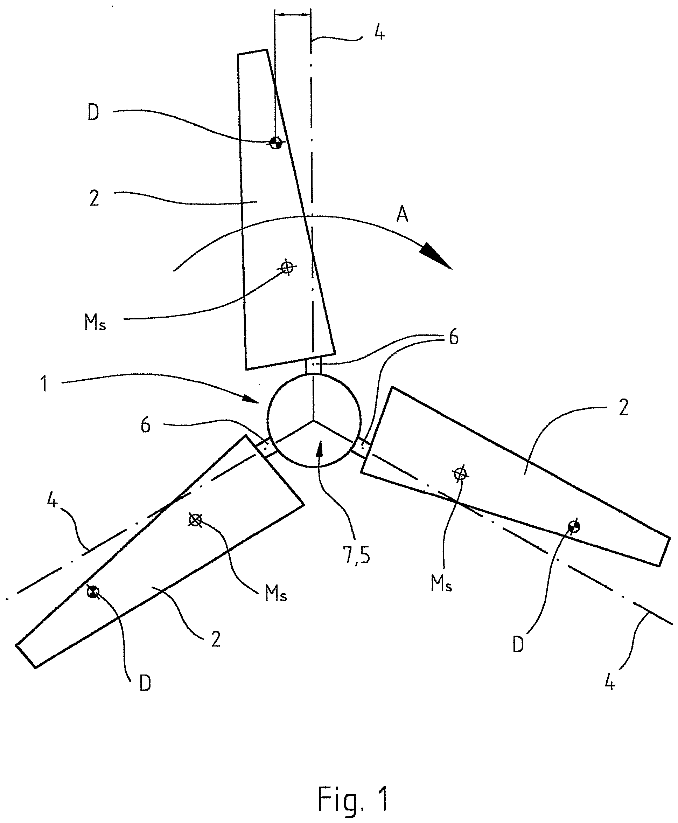

Die Fig. 1 bis 6 zeigen wesentliche Bestandteile einer hier nicht in ihrer Gesamtheit dargestellten Windkraftanlage. Die Windkraftanlage weist mindestens einen Rotor 1 mit mindestens einem Rotorblatt 2, vzw. mit mehreren, hier mit drei Rotorblättern 2 auf. Die Rotorblätter 2 sind mit einer im wesentlichen horizontal angeordneten Rotorwelle 3 über eine Rotor-Nabenlagerung wirksam verbunden. Hierbei sind die Rotorblätter 2 um eine im wesentlichen radial ausgerichtete Verstellachse 4 drehbar, wobei zur Einstellung der Rotorblätter 2 mindestens eine auf die Verstellachse 4 einwirkende Verstell-Einrichtung 5 vorgesehen ist.

Der hier dargestellte Rotor 1 der in ihrer Gesamtheit nicht dargestellten Windkraftanlage weist hier drei Rotorblätter 2 auf. Es ist aber denkbar, dass die Windkraftanlage mehrere Rotorblätter 2 bspw. vier Rotorblätter oder auch nur zwei, womöglich auch sogar nur ein Rotorblatt 2 aufweisen kann. Hierbei wird durch die Rotorblätter 2 bei Anströmung mit der entsprechenden Windgeschwindigkeit v_{wind} eine Rotationsbewegung der Rotorwelle 3 verursacht, da die Rotorblätter 2 mit der Rotorwelle 3 wirksam verbunden sind, was im folgenden noch näher erläutert werden soll. Die Rotorwelle 3 ist im wesentlichen horizontal verlaufend angeordnet. Dies muß nicht immer so sein. Es ist auch durchaus denkbar, dass die Rotorwelle 3 leicht schräg oder sogar vertikal angeordnet ist. Vzw. ist die Rotorwelle 3 jedoch im wesentlichen horizontal verlaufend angeordnet und mit einem hier nicht dargestellten Generator entsprechend wirksam verbunden, um entsprechende Energie bzw. Elektrizität zu erzeugen.

Die Rotorblätter 2 weisen jeweils einen Wellenstumpf 6 auf, der innerhalb einer Rotornabe 7 drehbar gelagert ist. Wie Fig. 1 erkennen läßt, ist durch die Achse des Wellenstumpfes 6 im wesentlichen die Verstellachse 4 definiert bzw. durch die Achse des Lagers 15 die Verstellachse 4 definiert. Aus Fig.1 ist ebenfalls gut zu erkennen, dass die einzelnen Rotorblätter 2, also die Längsachse der Rotorblätter 2 nicht mit der jeweiligen Verstellachse 4 zusammenfallen, sondern so angeordnet sind, dass der jeweilige Druckpunkt D der Rotorblätter 2 der jeweiligen Verstellachse 4 bei der Rotation des Rotors 1 hinterherläuft. Die Drehbewegung des Rotors 1 ist in Fig. 1 mit dem entsprechenden Pfeil A dargestellt.

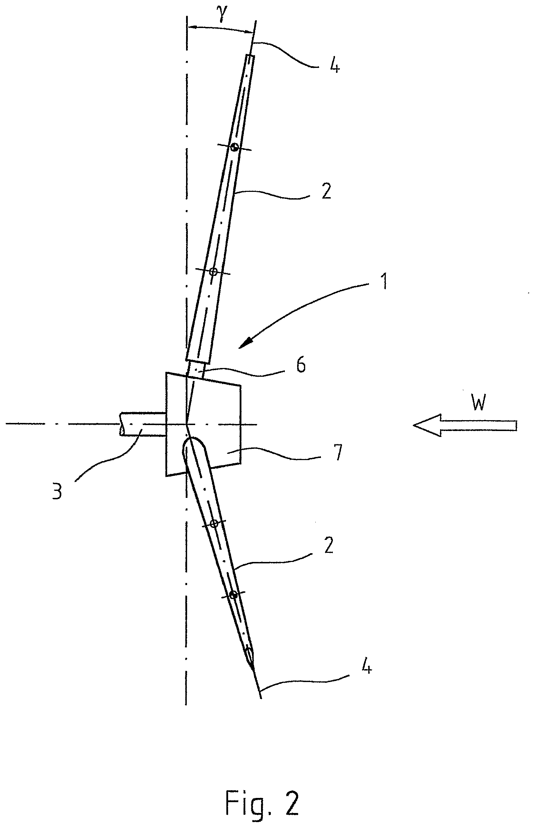

Fig. 2 zeigt nun den Rotor 1 in schematischer Darstellung von der Seite. Gut zu erkennen sind die in der Rotornabe 7 über die Wellenstümpfe 6 gelagerten Rotorblätter 2 sowie die hier schematisch angedeutete und teilweise dargestellte Rotorwelle 3. Aufgrund der Darstellung in Fig. 2 ist zu erkennen, dass die Verstellachsen 4 bzgl. der Rotorwelle 3 zwar im wesentlichen radial verlaufen, vzw. allerdings die Verstellachsen 4 der Rotorblätter 2 im wesentlichen leicht nach vorne geneigt sind, so dass die Rotorblätter 2 einen spitzen Winkel γ mit der allgemeinen Rotorebene bilden. Die Anordnung der Rotorblätter 2, die Ausbildung eines Winkels γ sowie die Ausbildung eines nachlaufenden Druckpunktes D haben im Betrieb der Windkraftanlage ein Verstellmoment in Richtung Fahnenstellung zur Folge.

Die eingangs beschriebenen Nachteile sind nun dadurch vermieden, dass die Verstell-Einrichtung 5 mindestens eine mit einer Steuerscheibe 8 zusammenwirkende Kurvenscheibe 9 aufweist und die Kurvenscheibe 9 derart angeordnet ist, dass die Drehachse der Kurvenscheibe 9 mit der Verstellachse 4 zusammenfällt. Dadurch, dass die Verstell-Einrichtung 5 nunmehr mindestens eine Steuerscheibe 8 und mindestens eine Kurvenscheibe 9 aufweist, die im wesentlichen reibschlüssig miteinander zusammenwirken, sind die eingangs genannten Nachteile im erheblichen Maße vermieden. Einerseits muß kein zusätzliches Riemenelement mehr vorgesehen werden sowie die Verschleißerscheinungen nunmehr wesentlich verringert sind, da die so ausgebildete Verstell-Einrichtung 5 im wesentlichen eben nicht verschleißanfällig ist. Weiterhin müssen keine aufwendigen und verschleißanfälligen zusätzlichen Gelenke etc. vorgesehen werden, so dass eine kurze Kraftübertragungskette mit spielfreier Kraftübertragung, und daher geringe Toleranzen und ein exakter Blatteinstellwinkel der Rotorblätter 2 mit der so ausgebildeten Verstell-Einrichtung 5 realisierbar sind, was im folgenden noch ausführlich erläutert werden soll. Weiterhin sind hier die Steuer- bzw. Reglerelemente, welche die Verstell-Einrichtung 5 aufweist, vor Witterungseinflüssen wie Korrosion und Vereisung sehr gut geschützt, denn die Verstell-Einrichtung 5 kann innerhalb der Rotornabe 7 vollständig integriert werden, was im folgenden ebenfalls ausführlich beschrieben werden wird. Im Ergebnis ist eine kostengünstige, verschleißfreie sowie - im Endeffekt - nahezu keine Toleranzen aufweisende Verstell-Einrichtung 5 geschaffen, mit deren Hilfe die Rotorblätter 2 optimal positionierbar sind.

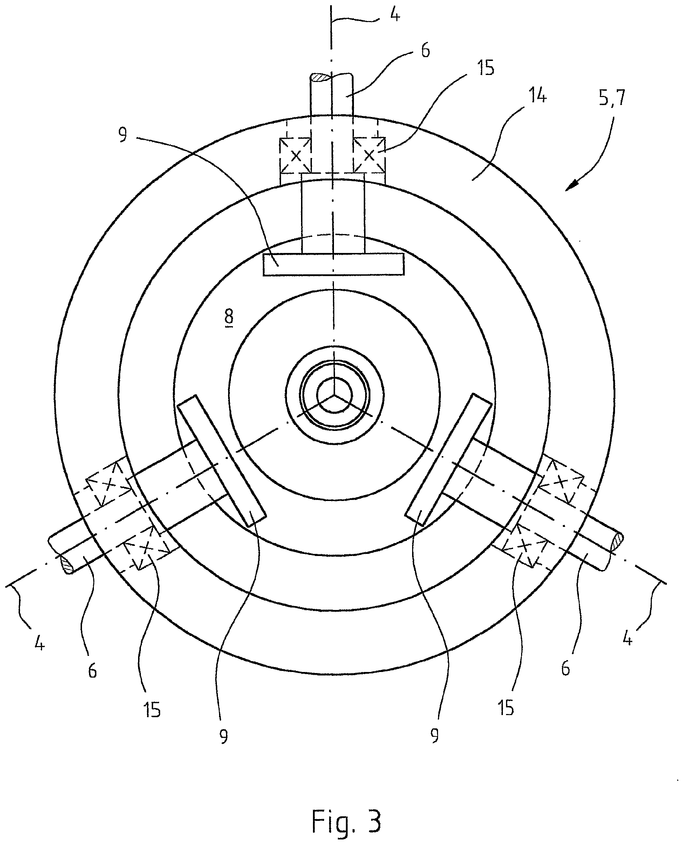

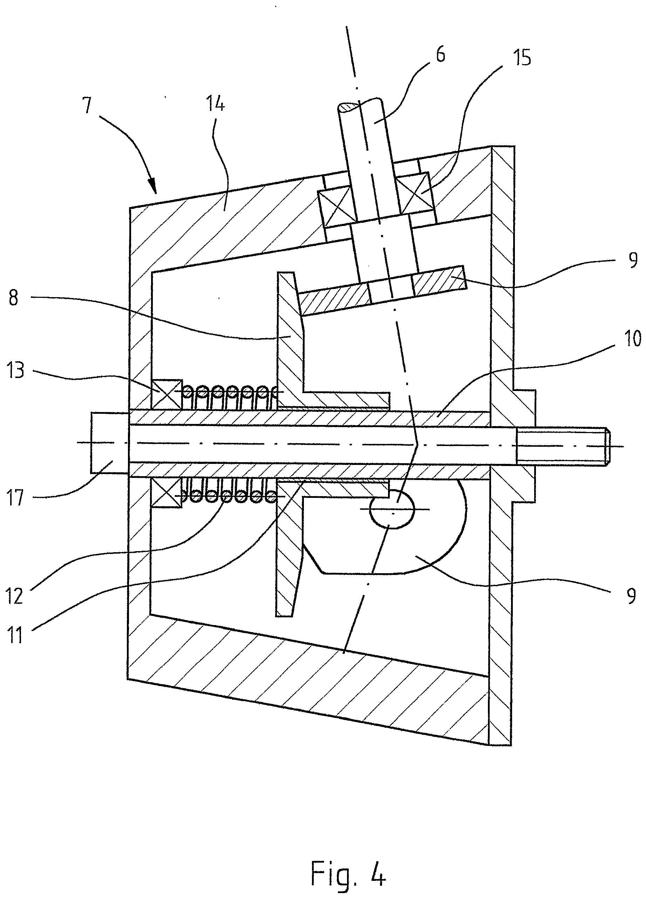

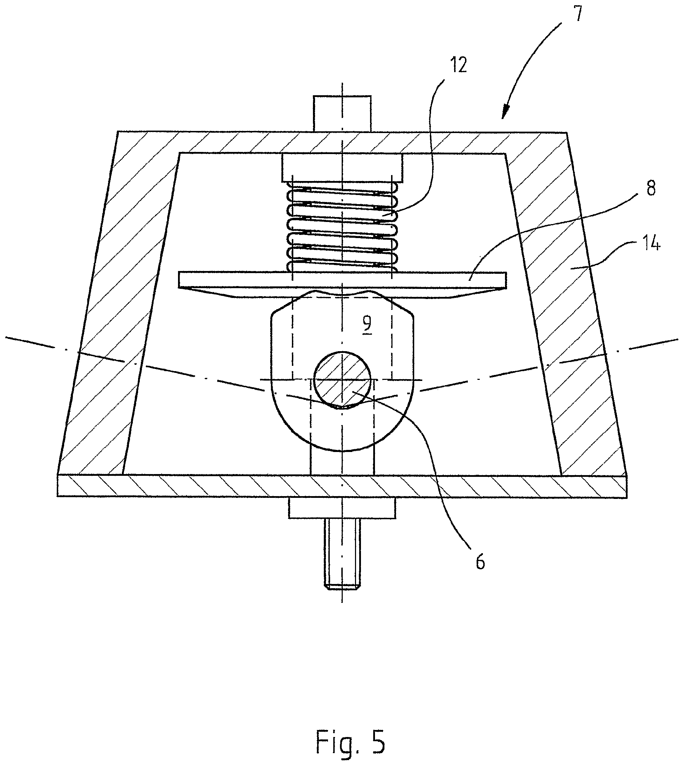

Die bevorzugte Ausführungsform der hier dargestellten Verstell-Einrichtung 5 weist, wie aus den Fig. 3 bis 6 ersichtlich, eine Steuerscheibe 8 und drei Kurvenscheiben 9 auf. Fig. 4 zeigt, dass die Steuerscheibe 8 auf einer Achse 10 innerhalb der Rotornabe 7 angeordnet und hierauf axial verschiebbar ist. Die Steuerscheibe 8 ist auf der Achse 10 mit Hilfe eines Lagers 11 drehbar gelagert. Es ist aus der Fig. 4 sowie auch aus der Fig. 5 deutlich zu erkennen, dass die einzelnen Kurvenscheiben 9 mit der Steuerscheibe 8 in einem reibschlüssigen Kontakt stehen. Hierbei wird die Steuerscheibe 8 durch ein Federelement 12 in Richtung der Kurvenscheiben 9 kraftbeaufschlagt. Wie die Fig. 4 erkennen läßt, ist auch das Federelement 12 drehbar mit Hilfe eines Lagers 13 gelagert, so dass eine Rotation der Steuerscheibe 8 und auch eine entsprechende Rotation des Federelementes 12 ermöglicht ist. Die Drehachse der Steuerscheibe 8 korrespondiert mit der Drehachse der Rotorwelle 3.

Die Fig. 3 bis 5 machen deutlich, dass die Verstell-Einrichtung 5 hier im wesentlichen aus einer Steuerscheibe 8 und drei Kurvenscheiben 9 bzw. der Lagerung der Steuerscheibe 8 und dem Federelement 12 besteht. Die Anzahl der Kurvenscheiben 9 ist im wesentlichen abhängig von der Anzahl der Rotorblätter 2. Die Kurvenscheiben 9 befinden sich jeweils an den unteren Enden der Wellenstümpfe 6 der Rotorblätter 2 und sind hier drehfest angeordnet. Hierbei werden durch die Achsen der einzelnen Wellenstümpfe 6 die Verstellachsen 4 der jeweiligen Rotorblätter 2 definiert. Der jeweilige Wellenstumpf 6 ist innerhalb der Umfangswandung 14 der Rotornabe 7 drehbar gelagert. Hierzu ist jeweils ein entsprechendes Lager 15 vorgesehen. In Abhängigkeit der Anzahl der Rotorblätter 2 ist nun auch eine entsprechende Anzahl an Wellenstümpfen 6 bzw. an Kurvenscheiben 9 vorgesehen. So ist durchaus denkbar, dass die Verstell-Einrichtung 5 daher vzw. zwei, vier oder auch mehr Kurvenscheiben 9 aufweist, die mit der entsprechenden Steuerscheibe 8 zusammenwirken. Dies ist abhängig von der jeweiligen Ausführungsform der Windkraftanlage, insbesondere des Rotors 1.

Auch die Materialien aus denen die Steuerscheibe 8 und die Kurvenscheiben 9 hergestellt sind, können vom jeweiligen Anwendungsfall und insbesondere in Abhängigkeit der auftretenden Kräfte unterschiedlich sein. Es kommen hier Stahl sowie Stahllegierungen aber auch entsprechende andere Gussmaterialen bzw. entsprechende Mischungen wie auch Kunststoffe in Frage. Entscheidend ist, dass ein punktueller Kontakt zwischen der Steuerscheibe 8 und der jeweiligen Kurvenscheibe 9 gewährleistet ist. Im Ergebnis ist eine optimale Lagerung der Steuerscheibe 8 bzw. der Kurvenscheibe 9 ermöglicht.

Auch die Ausbildung des Federelementes 12, hier als Schraubendruckfeder hat sich als bevorzugte Ausführungsform herausgestellt. Es ist aber auch denkbar, andere Federelemente, bspw. Tellerfedern oder dgl. hier vorzusehen.

Ein wesentlicher Vorteil ist, dass die Steuerscheibe 8 rotierbar und auch das Federelement 12 rotierbar gelagert sind, was im folgenden noch näher erläutert werden soll. Hierdurch bedingt sind auch Verschleißerscheinungen, insbesondere Abrieb zwischen Steuerscheibe 8 und Kurvenscheiben 9 erheblich minimiert, denn aufgrund der Rotationsmöglichkeit der Steuerscheibe 8 zusammen mit der Schraubendruckfeder kommt es zu einem geringen Reibverschleiß und zu einer hohen Regelgüte der Verstell-Einrichtung 5.

Als Materialien für Steuerscheibe 8 und Kurvenscheiben 9 kommen daher bevorzugt Materialien in Frage, die einen guten Kontakt zwischen den Elementen gewährleisten, also insbesondere Materialien, die ein gutes Abwälzen der Kurvenscheibe 9 auf der Steuerscheibe 8 gewährleisten. Hierbei ist insbesondere von Vorteil, dass die gesamte Verstell-Einrichtung 5 im wesentlichen innerhalb der Rotornabe 7 angeordnet ist und daher die einzelnen Elemente hier vor Witterungseinflüssen geschützt sind. Hierdurch bedingt werden die erforderlichen auftretenden Kontakte nicht durch das Eindringen von Wasser, oder anderen Witterungseinflüssen, wie Vereisungen oder Schmutz vermindert bzw. das Zusammenwirken der Elemente beeinträchtigt.

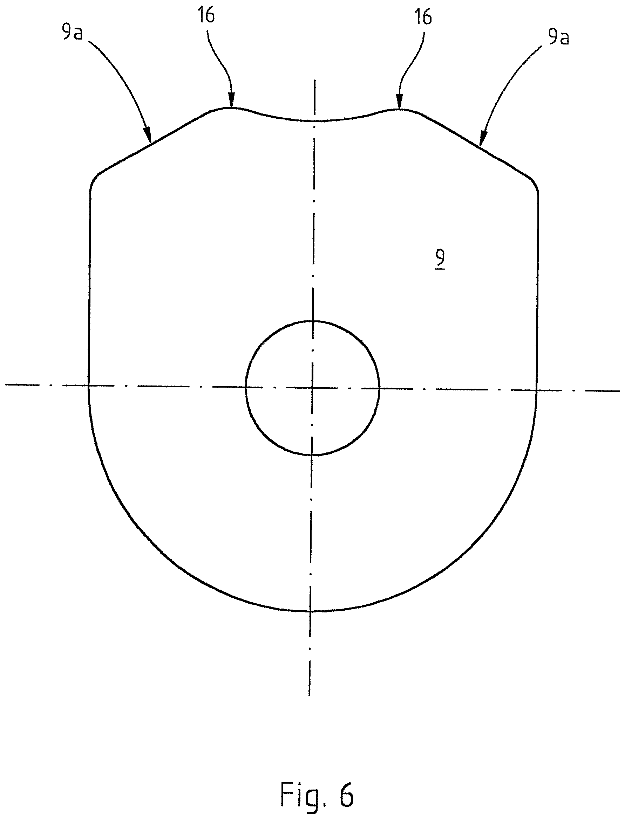

Die Fig. 5 und 6 zeigen eine Kurvenscheibe 9 von der Seite in schematischer Darstellung. Der obere Bereich der Kurvenscheibe 9 weist eine entsprechende Kontur 9a auf. Wie aus Fig. 5 und Fig. 6 deutlich zu erkennen ist, weist der Konturverlauf 9a der Kurvenscheibe 9 zwei Extrema 16 auf. Diese Extrema 16 dienen für die Realisierung der "Nulllage" bzw. der Neutralposition der Kurvenscheibe 9 auf der Steuerscheibe 8. Anders ausgedrückt, mit Hilfe der Extrema 16 ist die Nulllage der Kurvenscheibe 9 relativ zur Steuerscheibe 8 eindeutig definiert. Damit ist eine optimale Einstellung der Neutralposition der Rotorblätter 2 gewährleistet.

Wie die Fig. 4 und auch die Fig. 5 erkennen lassen, ist die Verstell-Einrichtung 5 innerhalb der Rotornabe 7 angeordnet bzw. integriert. Die Achse 10, auf der die Steuerscheibe 8 gelagert ist, ist hohl ausgeführt, so dass die Rotornabe 7 mit Hilfe eines Verbindungselementes 17, vzw. mit Hilfe eines Schraubelementes mit der Rotorwelle 3 zur Übertragung des Drehmomentes des Rotors 1 verbindbar ist. Anders ausgedrückt, die Verstell-Einrichtung 5 ist derart konstruiert, dass sie einerseits innerhalb der Rotornabe 7 integrierbar ist, andererseits aber die Rotornabe 7 in einfacher Weise auf die Rotorwelle 3 durch ein Verbindungselement 17, vzw. ein Schraubenelement mit der Rotorwelle 3 verschraubbar ist. Dies erhöht die Montageleichtigkeit der gesamten Windkraftanlage, da für die Montage nur ein Verbindungselement benötigt wird, was zusätzlich von großem Vorteil ist. Verstell-Einrichtung 5 und Rotornabe 7 bilden daher ein leicht montierbares Modul.

Mit Hilfe der Verstell-Einrichtung 5 ist nun eine Leistungs- und / oder Drehzahlsteuerung der Windkraftanlage ermöglicht. Dies soll im folgenden näher erläutert werden:
Die Verstell-Einrichtung 5 dient also als Steuer- und / oder Regelelement zur Steuerung / Regelung der Leistung P bzw. Drehzahl n der Windkraftanlage. Von besonderer Bedeutung ist hierbei die Ausbildung der Kurvenscheibe 9 bzw. der jeweiligen Kurvenscheiben 9, sowie des Federelementes 12, nämlich der hier vorgesehenen Federkraft des Federelementes 12 sowie der Ausbildung der Kurvenkontur 9a der Kurvenscheibe 9.

Alle diese Elemente, also Kurvenscheiben 9, Steuerscheibe 8 und Federelement 12 sind nun derart ausgebildet und angeordnet, dass das Haltemoment bzw. die Haltekräfte entsprechend auf die Rotorblätter 2 übertragbar sind, so dass deren Position entsprechend steuerbar bzw. regelbar ist. Hierzu darf nochmals auf die Fig. 1 verwiesen werden. Deutlich ist hier erkennbar, dass der Druckpunkt D der Rotorblätter 2 der jeweiligen Verstellachse 4 nachläuft. Hierdurch bedingt kommt es bei Anströmung mit einer Windgeschwindigkeit v_{wind} > vₙₑₙₙ, dargestellt in Fig. 2, zu einer Verdrehung der Rotorblätter 2 um die Verstellachse 4, insbesondere weil der Druckpunkt D eben außerhalb der jeweiligen Verstellachse 4 liegt.

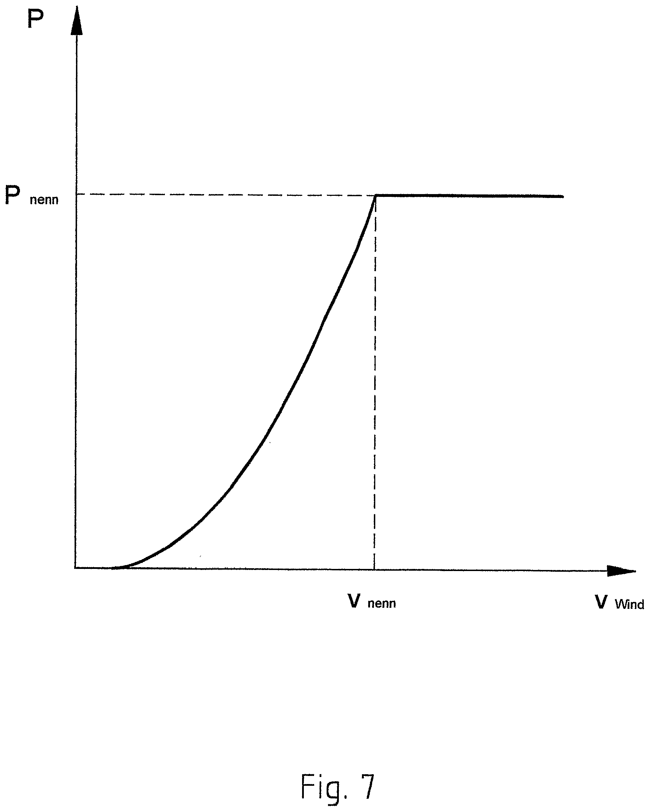

Die Verstell-Einrichtung 5 ist nun derart ausgebildet, dass ab einer bestimmten Windgeschwindigkeit vₙₑₙₙ die Leistung Pₙₑₙₙ der Windkraftanlage im wesentlichen konstant bleibt, so wie dies in der Fig. 7 dargestellt ist. Fig. 7 zeigt einen Anstieg der Leistung Pₙₑₙₙ der Windkraftanlage bei zunehmender Windgeschwindigkeit v_{wind} bis zum Wert vₙₑₙₙ. Oberhalb der Windgeschwindigkeit vₙₑₙₙ wird die Windkraftanlage daher aus Gründen der Sicherheit abgeregelt.

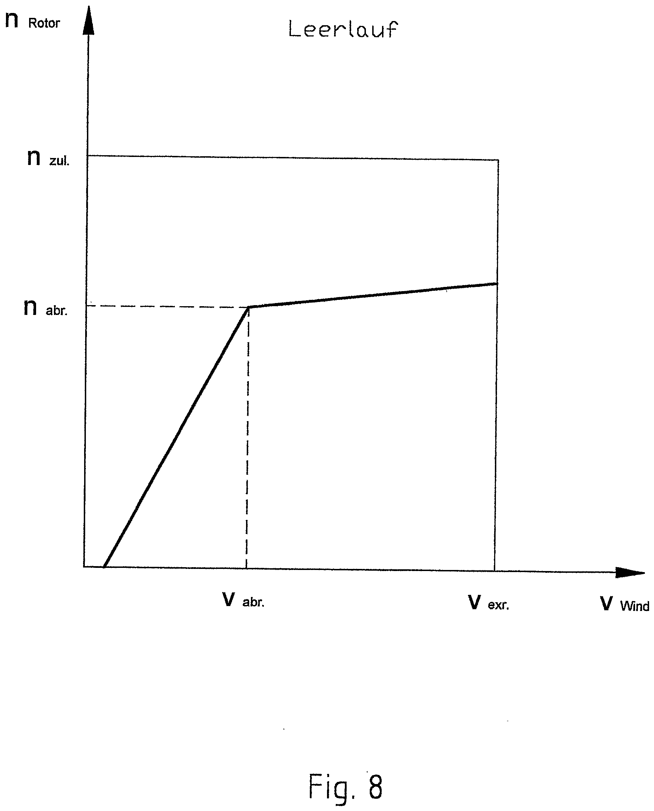

Fig. 8 zeigt nun, dass die Verstell-Einrichtung 5 derart ausgeführt und / oder ausgebildet ist, dass die Leerlauf-Drehzahl nᵣₒₜₒᵣ des Rotors 1 ab einer bestimmten Windgeschwindigkeit, hier ab dem Wert v_{abr} im wesentlichen nur noch leicht ansteigt, nämlich bis zur Windgeschwindigkeit vₑₓᵣ. Folglich wird hier die Drehzahl des Rotors ab Windgeschwindigkeit v_{abr} aus Gründen der Sicherheit abgeregelt. Dies gilt insbesondere für eine Windkraftanlage deren Rotorblätter 2 gegenüber der Rotorebene geneigt sind, also einen "Konuswinkel" aufweisen. Aufgrund des ebenfalls "nachlaufenden Massenschwerpunktes Mₛ" in Verbindung mit dem vorgesehenen Konuswinkel γ erzeugen die jeweiligen Fliehkräfte ebenfalls ein auf die Positionierung des Rotorblattes 2 einwirkendes Verstellmoment. Bei der Verstellung der Rotorblätter 2 in Richtung Fahnenstellung verkleinert sich auch der Winkel γ.

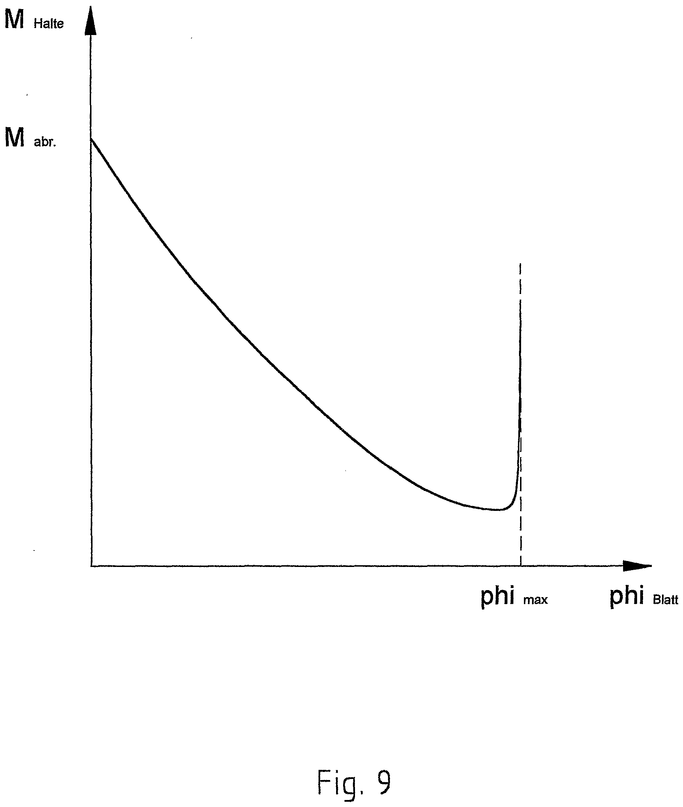

Aus der Fig. 7, welche die Leistungskennlinie, und aus der Fig. 8, welche die Leerlauf-Drehzahlkennlinie der Windkraftanlage mit der Verstell-Einrichtung 5 zeigt, ist erkennbar, dass Kurvenscheiben 9, Steuerscheibe 8 und Federelemente 12 derart ausgebildet und / oder angeordnet sind bzw. so zusammenwirken, dass der Verstellwinkel der Rotorblätter 2 gesteuert bzw. geregelt wird. Fig. 9 zeigt ab dem Abregelpunkt einen steilen Abfall des Haltemoments M. In Fig. 9 ist dargestellt, dass das Haltemoment M mit zunehmendem Verstellwinkel phi abnimmt und zwar bis zum Ende des Verstellwinkelbereichs, wo ein steiler Anstieg erfolgt. Dieser Anstieg wird durch die Konturen 9a der Kurvenscheiben 9, nämlich durch die "äußeren Eckpunkte", die nicht näher bezeichnet sind, realisiert. Fig. 9 zeigt daher die "Regelcharakteristik" der Verstell-Einrichtung 5. Die "Reglercharakteristik" der Verstell-Einrichtung 5 wird daher im wesentlichen durch die Ausbildung / Konturverlauf 9a aller Kurvenscheiben und dem Federelement 12 definiert.

Im Ergebnis sind für eine Windkraftanlage mit einer derart ausgebildeten Verstell-Einrichtung 5 entscheidende Vorteile erzielt, wobei der Arbeits-, Montage- und Wartungsaufwand verringert sind, die Verschleißerscheinungen vermindert sind, ein gutes Reglerverhalten der Verstell-Einrichtung 5 erzielbar ist und sämtliche Vorteile bei nur geringen Kosten realisierbar sind.

### Bezugszeichenliste:

- 1: Rotor
- 2: Rotorblatt
- 3: Rotorwelle
- 4: Verstellachse
- 5: Verstell-Einrichtung
- 6: Wellenstumpf
- 7: Rotornabe
- 8: Steuerscheibe
- 9: Kurvenscheibe
- 9a: Kontur
- 10: Achse
- 11: Lager
- 12: Federelement
- 13: Lager
- 14: Umfangswandung
- 15: Lager
- 16: Extrema
- 17: Schraubelement
- W: Wind
- D: Druckpunkt
- Mₛ: Massenschwerpunkt
- A: Pfeil
- P: Leistung
- n: Drehzahl
- M: Haltemoment
- phi: Verstellwinkel
- v_{wind}: Windgeschwindigkeit
- γ: Konuswinkel

## Patentansprüche

1. Windkraftanlage mit mindestens einem Rotor (1), wobei der Rotor (1) mindestens ein Rotorblatt (2), vzw. mehrere Rotorblätter (2) aufweist, wobei das Rotorblatt (2) mit einer Rotorwelle (3) wirksam verbunden ist, wobei das Rotorblatt (2) um eine im wesentlichen radial ausgerichtete Verstellachse (4) drehbar ist und wobei zur Einstellung des Rotorblattes (2) mindestens eine Verstell-Einrichtung (5) vorgesehen ist, **dadurch gekennzeichnet, dass** die Verstell-Einrichtung (5) mindestens eine mit einer Steuerscheibe (8) zusammenwirkende Kurvenscheibe (9) aufweist und die Kurvenscheibe (9) derart angeordnet ist, dass die Drehachse der Kurvenscheibe (9) mit der Verstellachse (4) zusammenfällt.

2. Windkraftanlage nach Anspruch 1, **dadurch gekennzeichnet, dass** die Steuerscheibe (8) auf einer Achse (10) innerhalb der Rotornabe (7) angeordnet und axial verschiebbar ist.

3. Windkraftanlage nach Anspruch 2, **dadurch gekennzeichnet, dass** die Steuerscheibe (8) auf der Achse (10) mit Hilfe eines Lagers (11) drehbar gelagert ist.

4. Windkraftanlage nach einem der Ansprüche 1 bis 3, **dadurch gekennzeichnet, dass** die Steuerscheibe (8) mit der Kurvenscheibe (9) in reibschlüssigem Kontakt steht.

5. Windkraftanlage nach einem der Ansprüche 1 bis 4, **dadurch gekennzeichnet, dass** die Steuerscheibe (8) durch mindestens ein Federelement (12) in Richtung der Kurvenscheibe (9) kraftbeaufschlagt ist.

6. Windkraftanlage nach Anspruch 5, **dadurch gekennzeichnet, dass** das Federelement (12) drehbar gelagert ist, so dass eine Rotation der Steuerscheibe (8) und des Federelementes (12) möglich ist.

7. Windkraftanlage nach einem der Ansprüche 1 bis 6, **dadurch gekennzeichnet, dass** die Drehachse der Steuerscheibe (8) mit der Drehachse der Rotorwelle (3) korrespondiert.

8. Windkraftanlage nach einem der Ansprüche 1 bis 7, **dadurch gekennzeichnet, dass** die Kurvenscheibe (9) am unteren Ende eines Wellenstumpfes (6) des Rotorblattes (2) drehfest angeordnet ist und durch die Achse des Wellenstumpfes (6) die Verstellachse (4) des Rotorblattes (2) definiert ist.

9. Windkraftanlage nach Anspruch 8, **dadurch gekennzeichnet, dass** der Wellenstumpf (6) innerhalb der Umfangswandung (14) der Rotornabe (7) drehbar gelagert ist.

10. Windkraftanlage nach einem der Ansprüche 1 bis 9, **dadurch gekennzeichnet, dass** der Konturverlauf (9a) der Kurvenscheibe (9) zwei Extrema (16) für die Realisierung der Nulllage bzw. der Neutralposition der Kurvenscheibe (9) auf der Steuerscheibe (8) aufweist.

11. Windkraftanlage nach Anspruch 8 oder nach den Ansprüchen 8 und 10, **dadurch gekennzeichnet, dass** drei Rotorblätter (2) vorgesehen sind und die Wellenstümpfe (6) der Rotorblätter (2) innerhalb der Umfangswandung (14) der Rotornabe (7) drehbar gelagert sind.

12. Windkraftanlage nach einem der Ansprüche 2 bis 11, **dadurch gekennzeichnet, dass** die Verstell-Einrichtung (5) innerhalb der Rotornabe (7) angeordnet ist.

13. Windkraftanlage nach einem der Ansprüche 2 bis 12, **dadurch gekennzeichnet, dass** die Achse (10) der Steuerscheibe (8) hohl ausgeführt ist, so dass die Rotornabe (7) mit Hilfe eines Verbindungselementes (17) mit der Rotorwelle (3) zur Übertragung eines Drehmomentes verbindbar ist.

14. Windkraftanlage nach einem der Ansprüche 1 bis 13, **dadurch gekennzeichnet, dass** die Rotorblätter (2) derart angeordnet sind, dass der jeweilige Druckpunkt (D) der Rotorblätter (2) der jeweiligen Verstellachse (4) hinterherläuft.

15. Windkraftanlage nach einem der Ansprüche 1 bis 14, **dadurch gekennzeichnet, dass** die Verstellachsen (4) der Rotorblätter (2) leicht geneigt sind, so dass die Rotorblätter (2) einen spitzen Winkel (γ) mit der allgemeinen Rotorebene bilden.

16. Windkraftanlage nach einem der Ansprüche 1 bis 15, **dadurch gekennzeichnet, dass** mit Hilfe der Verstell-Einrichtung (5) eine Leistungs- und / oder Drehzahlsteuerung der Windkraftanlage ermöglicht ist.

17. Windkraftanlage nach einem der Ansprüche 5 bis 16, **dadurch gekennzeichnet, dass** Kurvenscheiben (9), Steuerscheibe (8) und Federelement (12) derart ausgebildet und angeordnet sind, dass Haltemomente (M) bzw. Haltekräfte auf die Rotorblätter (2) übertragbar sind, so dass deren Positionierung steuerbar ist.

18. Windkraftanlage nach einem der Ansprüche 5 bis 17, **dadurch gekennzeichnet, dass** Kurvenscheiben (9), Steuerscheibe (8) und Federelement (12) derart ausgebildet und angeordnet sind, dass der Verstellwinkelbereich der Rotorblätter (2) durch eine bestimmte Charakteristik des Haltemoments (M) bestimmt ist.

19. Windkraftanlage nach einem der Ansprüche 1 bis 18, **dadurch gekennzeichnet, dass** die Verstell-Einrichtung (5) derart ausgeführt und / oder ausgebildet ist, dass die Nennleistung (Pₙₑₙₙ) der Windkraftanlage ab einer bestimmten Windgeschwindigkeit (vₙₑₙₙ) konstant bleibt, nämlich oberhalb dieser bestimmten Windgeschwindigkeit (vₙₑₙₙ) die Windkraftanlage abgeregelt ist.

20. Windkraftanlage nach einem der Ansprüche 1 bis 19, **dadurch gekennzeichnet, dass** die Verstell-Einrichtung (5) derart ausgeführt und / oder ausgebildet ist, dass die Leerlauf-Drehzahl (n) des Rotors (1) ab einer bestimmten Windgeschwindigkeit (v_{abr}) abgeregelt ist.

## Claims

1. Wind energy installation having at least one rotor (1) with the rotor (1) having at least one rotor blade (2), preferably two or more rotor blades (2), wherein the rotor blade (2) is effectively connected to a rotor shaft (3), wherein the rotor blade (2) can rotate about an essentially radially aligned pitch control axis (4), and wherein at least one pitch control device (5) is provided in order to adjust the rotor blade (2), **characterized in that** the pitch control device (5) has at least one cam disk (9) which interacts with a control disk (8), and the cam disk (9) is arranged such that the rotation axis of the cam disk (9) coincides with the pitch control axis (4).

2. Wind energy installation according to Claim 1, **characterized in that** the control disk (8) is arranged and can be moved axially on a shaft (10) within the rotor hub (7).

3. Wind energy installation according to Claim 2, **characterized in that** the control disk (8) is mounted on the shaft (10) by means of a bearing (11) such that it can rotate.

4. Wind energy installation according to one of Claims 1 to 3, **characterized in that** the control disk (8) makes friction contact with the cam disk (9).

5. Wind energy installation according to one of Claims 1 to 4, **characterized in that** the control disk (8) has force applied to it by at least one spring element (12) in the direction of the cam disk (9).

6. Wind energy installation according to Claim 5, **characterized in that** the spring element (12) is mounted such that it can rotate, such that rotation of the control disk (8) and of the spring element (12) is possible.

7. Wind energy installation according to one of Claims 1 to 6, **characterized in that** the rotation axis of the control disk (8) corresponds to the rotation axis of the rotor shaft (3).

8. Wind energy installation according to one of Claims 1 to 7, **characterized in that** the cam disk (9) is arranged at the lower end of a shaft stub (6) of the rotor blade (2) such that they rotate together, and the pitch control axis (4) of the rotor blade (2) is defined by the axis of the shaft stub (6).

9. Wind energy installation according to Claim 8, **characterized in that** the shaft stub (6) is mounted within the circumferential wall (14) of the rotor hub (7) such that it can rotate.

10. Wind energy installation according to one of Claims 1 to 9, **characterized in that** the contour profile (9a) of the cam disk (9) has two extremes (16) for provision of the null position or the neutral position of the cam disk (9) on the control disk (8).

11. Wind energy installation according to Claim 8 or according to Claims 8 and 10, **characterized in that** the three rotor blades (2) are provided, and the shaft stubs (6) of the rotor blades (2) are mounted within the circumferential wall (14) of the rotor hub (7) such that they can rotate.

12. Wind energy installation according to one of Claims 2 to 11, **characterized in that** the pitch control device (5) is arranged within the rotor hub (7).

13. Wind energy installation according to one of Claims 2 to 12, **characterized in that** the shaft (10) of the control disk (8) is hollow, so that the rotor hub (7) can be connected by means of a connecting element (17) to the rotor shaft (3) in order to transmit a torque.

14. Wind energy installation according to one of Claims 1 to 13, **characterized in that** the rotor blades (2) are arranged such that the respective pressure point (D) on each of the rotor blades (2) runs behind the respective pitch control axis (4).

15. Wind energy installation according to one of Claims 1 to 14, **characterized in that** the pitch control axes (4) of the rotor blades (2) are slightly inclined, so that the rotor blades (2) form an acute angle (γ) with the general rotor plane.

16. Wind energy installation according to one of Claims 1 to 15, **characterized in that** the pitch control device (5) allows a power and/or rotation speed of the wind energy installation to be controlled.

17. Wind energy installation according to one of Claims 5 to 16, **characterized in that** cam disks (9), the control disk (8) and the spring element (12) are designed and arranged such that holding torques (M) or holding forces can be transmitted to the rotor blades (2), so that their positioning can be controlled.

18. Wind energy installation according to one of Claims 5 to 17, **characterized in that** the cam disks (9), the control disk (8) and the spring element (12) are designed and arranged such that the pitch control angle range of the rotor blades (2) is determined by a specific characteristic of the holding torque (M).

19. Wind energy installation according to one of Claims 1 to 18, **characterized in that** the pitch control device (5) is designed and/or configured such that the rated power (Pₙₑₙₙ) of the wind energy installation remains constant above a specific wind speed (vₙₑₙₙ), namely the wind energy installation is regulated above said specific wind speed (vₙₑₙₙ).

20. Wind energy installation according to one of Claims 1 to 19, **characterized in that** the pitch control device (5) is designed and/or configured such that the idling rotation speed (n) of the rotor (1) is regulated above a specific wind speed (v_{abr}).

## Revendications

1. Éolienne, comprenant au moins un rotor (1), le rotor (1) présentant au moins une pale de rotor (2), de préférence plusieurs pales de rotor (2), la pale de rotor (2) étant en liaison fonctionnelle avec un arbre de rotor (3), la pale de rotor (2) pouvant tourner autour d'un axe de réglage (4) orienté essentiellement radialement et, pour l'ajustement de la pale de rotor (2), au moins un dispositif de réglage (5) étant prévu, **caractérisée en ce que** le dispositif de réglage (5) présente au moins un disque de came (9) coopérant avec un disque de commande (8) et le disque de came (9) étant disposé de telle sorte que l'axe de rotation du disque de came (9) coïncide avec l'axe de réglage (4).

2. Éolienne selon la revendication 1, **caractérisée en ce que** le disque de commande (8) est disposé sur un axe (10) à l'intérieur du moyeu de rotor (7) et peut être déplacé axialement.

3. Éolienne selon la revendication 2, **caractérisée en ce que** le disque de commande (8) est supporté de manière rotative sur l'axe (10) à l'aide d'un palier (11).

4. Éolienne selon l'une quelconque des revendications 1 à 3, **caractérisée en ce que** le disque de commande (8) est en contact d'engagement par friction avec le disque de came (9).

5. Éolienne selon l'une quelconque des revendications 1 à 4, **caractérisée en ce que** le disque de commande (8) est sollicité par force par au moins un élément de ressort (12) dans la direction du disque de came (9).

6. Éolienne selon la revendication 5, **caractérisée en ce que** l'élément de ressort (12) est supporté de manière rotative de telle sorte qu'une rotation du disque de commande (8) et de l'élément de ressort (12) soit possible.

7. Éolienne selon l'une quelconque des revendications 1 à 6, **caractérisée en ce que** l'axe de rotation du disque de commande (8) correspond à l'axe de rotation de l'arbre de rotor (3).

8. Éolienne selon l'une quelconque des revendications 1 à 7, **caractérisée en ce que** le disque de came (9) est disposé de manière solidaire en rotation à l'extrémité inférieure d'un bout d'arbre (6) de la pale de rotor (2) et l'axe de réglage (4) de la pale de rotor (2) est défini par l'axe du bout d'arbre (6).

9. Éolienne selon la revendication 8, **caractérisée en ce que** le bout d'arbre (6) est supporté de manière rotative à l'intérieur de la paroi périphérique (14) du moyeu de rotor (7).

10. Éolienne selon l'une quelconque des revendications 1 à 9, **caractérisée en ce que** l'allure du contour (9a) du disque de came (9) présente deux extrêmes (16) pour la réalisation de la position zéro ou de la position neutre du disque de came (9) sur le disque de commande (8).

11. Éolienne selon la revendication 8, ou selon les revendications 8 et 10, **caractérisée en ce que** trois pales de rotor (2) sont prévues et les bouts d'arbre (6) des pales de rotor (2) sont supportés à rotation à l'intérieur de la paroi périphérique (14) du moyeu de rotor (7).

12. Éolienne selon l'une quelconque des revendications 2 à 11, **caractérisée en ce que** le dispositif de réglage (5) est disposé à l'intérieur du moyeu de rotor (7).

13. Éolienne selon l'une quelconque des revendications 2 à 12, **caractérisée en ce que** l'axe (10) du disque de commande (8) est réalisé sous forme creuse, de telle sorte que le moyeu de rotor (7) puisse être connecté à l'aide d'un élément de liaison (17) à l'arbre de rotor (3) en vue de transférer un couple.

14. Éolienne selon l'une quelconque des revendications 1 à 13, **caractérisée en ce que** les pales de rotor (2) sont disposées de telle sorte que le point de pression respectif (D) des pales de rotor (2) suive l'axe de réglage (4) respectif.

15. Éolienne selon l'une quelconque des revendications 1 à 14, **caractérisée en ce que** les axes de réglage (4) des pales de rotor (2) sont légèrement inclinés de telle sorte que les pales de rotor (2) forment un angle aigu (γ) avec le plan général du rotor.

16. Éolienne selon l'une quelconque des revendications 1 à 15, **caractérisée en ce qu'**à l'aide du dispositif de réglage (5), une commande de puissance et/ou de vitesse de rotation de l'éolienne est possible.

17. Éolienne selon l'une quelconque des revendications 5 à 16, **caractérisée en ce que** les disques de came (9), le disque de commande (8) et l'élément de ressort (12) sont réalisés et disposés de telle sorte que des couples de retenue (M) ou des forces de retenue puissent être transmis aux pales de rotor (2), de telle sorte que leur positionnement soit commandable.

18. Éolienne selon l'une quelconque des revendications 5 à 17, **caractérisée en ce que** les disques de came (9), le disque de commande (8) et l'élément de ressort (12) sont réalisés et disposés de telle sorte que la plage angulaire de réglage des pales de rotor (2) soit déterminée par une caractéristique déterminée du couple de retenue (M) .

19. Éolienne selon l'une quelconque des revendications 1 à 18, **caractérisée en ce que** le dispositif de réglage (5) est réalisé et/ou constitué de telle sorte que la puissance nominale (Pₙₑₙₙ) de l'éolienne reste constante à partir d'une vitesse du vent déterminé (vₙₑₙₙ), à savoir l'éolienne est réglée de manière à s'arrêter au-dessus de cette vitesse du vent déterminée (vₙₑₙₙ).

20. Éolienne selon l'une quelconque des revendications 1 à 19, **caractérisée en ce que** le dispositif de réglage (5) est réalisé et/ou constitué de telle sorte que la vitesse de rotation de marche à vide (n) du rotor (1) soit réglée à partir d'une vitesse du vent déterminée (v_{abr}).
